# EUROPEAN PATENT SPECIFICATION

(11) **EP 4 467 809 B1**
(45) Date of publication and mention of the grant of the patent: **02.12.2026**
(21) Application number: 23174499.6
(22) Date of filing: 22.05.2023
(51) Int. Cl.: F03G 7/00

(54) **PRESSURE RETARDED OSMOSIS SYSTEM**
DRUCKVERZÖGERTES OSMOSESYSTEM
SYSTÈME D'OSMOSE RETARDÉE PAR PRESSION

(43) Date of publication of application: 27.11.2024
(73) Proprietor: Danfoss A/S, 6430 Nordborg (DK); Saltpower Holdings APS, 6400 Sønderborg (DK)
(72) Inventor: Enevoldsen, Georg, 6430 Nordborg (DK); Pedersen, Lars Storm, 6400 Sønderborg (DK)
(74) Representative: Keil & Schaafhausen Patentanwälte PartGmbB

(56) References cited:
- WO-A1-2019/051588
- WO-A1-2021/165337
- WO-A1-2023/036943
- SOLTANI ROGHAYEH ET AL: "Modeling and simulation of the dual stage pressure retarded osmosis systems", DESALINATION, vol. 460, 19 March 2019 (2019-03-19), pages 28 - 40, XP085643847, ISSN: 0011-9164, DOI: 10.1016/J.DESAL.2019.02.010

## Description

The present invention relates to a pressure retarded osmosis system comprising a membrane unit having a high-pressure inlet connection and a high-pressure outlet connection on one side of a membrane arrangement and a low-pressure inlet connection and a low-pressure outlet connection on the other side of the membrane arrangement, wherein the high-pressure inlet connection is connected to a pressure exchanger, and the high-pressure outlet connection is connected to a motor and to a high-pressure inlet port of the pressure exchanger.

Such a pressure retarded osmosis system is known, for example, from EP 2 153 881 A1. Soltani Roghayeh et al: "Modeling and simulation of the dual stage pressure retarded osmosis system" (DOI: 10.1016/J.DESAL.2019.02.101) relates to a dual pressure retarded osmosis system. WO 2019/051588 A1 relates to adaptive membrane systems. WO 2021/165337 A1 relates to an osmotic solution mining. WO 2023/036943 A1 relates to an anit-scalant process for an osmotic unit.

In a pressure retarded osmosis system a difference between the salt concentrations of two liquids is used to gain energy. The high-pressure side of the membrane unit, i.e. the area between the high-pressure inlet connection and the high-pressure outlet connection is provided with a flow of a liquid having a high salt concentration and a high-pressure, wherein the low-pressure side of the membrane unit, i.e. the area between the low-pressure inlet connection and the low-pressure outlet connection of the membrane unit is provided with a flow of a liquid having a much lower salt concentration and a much lower pressure. The membrane, which is a semi permeable membrane, allows the liquid having the lower concentration of salt to migrate to the other side. Theoretically it allows water molecules to pass, and not the larger salt ions, but in practice some salt does pass anyway. This leads to the effect that the pressure on the high-pressure side is at least maintained, however, the volume flow on the high-pressure side is increased. At the high-pressure outlet connection there is a flow larger than the flow at the high-pressure inlet connection, however, having approximately the same pressure. The flow at the high-pressure outlet connection can be divided into one part which is supplied to the motor to generate mechanical power and in one part which is guided back to the pressure exchanger. In this description the term "motor" is used for a device which produces mechanical energy when driven by a flow of hydraulic fluid. The motor could also be called a turbine that generates mechanical power which is converted into electrical power. The pressure exchanger transfers the high-pressure of the fluid at the high-pressure outlet connection of the membrane unit to the fluid supplied to the high-pressure inlet connection of the membrane unit.

In order to produce enough mechanical energy, a rather high salt concentration and rather high-pressures are required. Basically, the pressure of the liquid at the high-pressure side of the membrane arrangement should be higher than 120 bar or more.

The object underlying the invention is to operate a pressure retarded osmosis system at a pressure higher than 60 to 80 bar, in particular higher than 100 bar and preferably higher than 120 bar.

This object is solved with a pressure retarded osmosis system according to claim 1.

The pressure exchanger comprises at least a first stage and a second stage, the first stage being arranged nearest to the high-pressure inlet connection of the membrane unit, wherein the high-pressure inlet port of the first stage is connected to the high-pressure outlet connection of the membrane unit and a high-pressure inlet port of the second stage is provided with fluid having a lower pressure and a high-pressure outlet port of the second stage is connected to a low-pressure inlet port of the first stage.

In this way the two stages of the pressure exchanger are connected in series at least for the flow into the membrane unit. The two stages of the pressure exchanger can also be in form of two separate pressure exchanger units. When two stages are used, each stage has to increase the pressure of the incoming liquid with a smaller pressure difference. When, for example, a pressure of 200 bar at the high-pressure inlet connection of the membrane unit is required, the first stage can increase the pressure from 70 bar to 200 bar, wherein the second stage increases the pressure from a supply pressure of approximately 2 to 10 bar to the 70 bar required at the inlet port of the first stage. Since the two stages need not to handle such a large pressure difference operation of these pressure exchanger stages is less complicated. The pressure at the high-pressure outlet connection of the membrane unit can be transferred to the fluid entering the high-pressure inlet connection of the membrane unit, so that the energy stored in the high-pressure liquid is not wasted. The mechanical energy produced by the motor or turbine can be used to drive another device, for example an electric machine operating as generator or the motor can be used directly to drive elements of the pressure exchanger.

In an embodiment of the invention the membrane unit is a first membrane unit and the motor is a first motor, and a high-pressure inlet connection of a second membrane unit is connected to an outlet of the first motor and a second motor is connected to the high-pressure outlet of the second membrane unit. As described above, the liquid leaving the first membrane unit still has a rather high salt concentration, although it is diluted by liquid which has been fed to the low-pressure inlet connection of the first membrane unit. The pressure reduction across the first motor is tuned so that there is still enough pressure available for performing a second step of generation of mechanical energy. This second step can be performed by means of the second membrane unit. In the second membrane unit there is the same pressure retarded osmosis, however, on a lower level, i.e. having a lower salt concentration and a lower pressure.

In an embodiment of the invention the low-pressure outlet port of the first stage of the pressure exchanger is connected to the high-pressure inlet connection of the second membrane unit. In other words, the first stage of the pressure exchanger bridges the first motor. As mentioned above, the pressure at the low-pressure outlet port of the first stage is still high enough to be used in the pressure retarded osmosis in the second membrane unit.

In an embodiment of the invention the high-pressure outlet connection of the second membrane unit is connected to the high-pressure inlet port of the second stage of the pressure exchanger. A pressure at the high-pressure outlet connection of the second membrane unit corresponds basically to the pressure at the high-pressure inlet connection of the second membrane unit, so that this pressure can simply be used as inlet pressure to the second stage of the pressure exchanger. Thus, although a second membrane unit is used, the operating conditions for the two stages of the pressure exchanger have not been changed.

In an embodiment of the invention a first pressure difference over the first stage of the pressure exchanger corresponds to a second pressure difference over the first motor. Thus, no means for a pressure equalization between the outlet of the first motor and the low-pressure outlet port of the first stage of the pressure exchanger are necessary.

In an embodiment of the invention the low-pressure connection of the first membrane unit is connected to a first supply pump and the low-pressure connection of the second membrane unit is connected to a second supply pump. The two supply pumps are only necessary to produce a flow of liquid through the low pressure side of the membrane units. Thus, high-pressure pumps are not required here.

In an embodiment of the invention the second supply pump produces a larger volume flow than the first supply pump. The flow of liquid entering the high-pressure inlet connection of the second membrane unit is larger than the flow of liquid entering the high-pressure inlet connection of the first membrane unit. In the first membrane unit at least part of the liquid supplied to the low-pressure inlet connection of the first membrane unit is added to the flow supplied to the high-pressure inlet connection.

According to the invention, upstream of at least one of the high-pressure inlet ports a feed pump is arranged. Such a feed pump is used in order to produce a flow of fluid through the respective high-pressure loop. **It** is sufficient that the feed pump raises the pressure only by a small amount, for example by 1 bar.

According to the invention, the feed pump is a positive displacement pump, namely a vane pump, and is integrated in the pressure exchanger.

**In** an embodiment of the invention the positive displacement pump is used as flow meter. When a positive displacement pump is used, this pump provides an information how much fluid is being running through the pump and this again means that it is possible from this information to control the behaviour of the pressure exchanger, for example the rotational speed.

**In** an embodiment of the invention at least one of the stages of the pressure exchanger comprises more than one pressure exchange unit. **It** is thus possible to separate the stage and to use two or more pressure exchange units. Each of these pressure exchange units can be dimensioned with a smaller size.

**In** an embodiment of the invention the second stage of the pressure exchanger comprises more pressure exchange units than the first stage. Thus, it is possible, for example, to use several small pressure exchangers in the second stage and one big pressure exchanger in the first stage. This can increase the efficiency because the internal leakage does not increase proportional with volume flow.

In an embodiment of the invention the pressure exchange unit of the same stage have the same capacity. Thus, these pressure exchange units are interchangeable. This reduces costs for maintenance.

In an embodiment of the invention at least two pressure exchange units of the same stage are driven by a common drive. They can, for example, be arranged on the same double axle electric motor making the system more cost effective.

Preferred embodiment of the invention will now be described with reference to the drawing, wherein:
Fig. 1 shows a first embodiment of a pressure retarded osmosis system,
Fig. 2 shows a second embodiment of a pressure retarded osmosis system, and.
Fig. 3 shows a third embodiment of a pressure retarded osmosis system.

In all figures the same elements are denoted with the same reference numerals.

A pressure retarded osmosis system 1 comprises a membrane unit 2. The membrane unit 2 comprises a high-pressure inlet connection 3 and a high-pressure outlet connection 4 on one side of a membrane arrangement 5 and a low-pressure inlet connection 6 and a low-pressure outlet connection 7 on the other side of the membrane arrangement 5. The membrane arrangement 5 is simply illustrated as a line. However, since a rather high area of the membrane is required, the membrane arrangement 5 can have one or more semipermeable membranes having a more sophisticated form.

The low-pressure inlet connection 6 is connected to a supply pump 8. The supply pump 8 supplies a liquid with low salt concentration, for example fresh water, to the low-pressure inlet connection 6 of the membrane unit 2.

The high-pressure inlet connection 3 is connected to a pressure exchanger 9. The pressure exchanger 9 comprises a first stage 10 and a second stage 11. The first stage 10 is the stage nearest to the high-pressure inlet connection 3 of the membrane unit 2. The sequence of the stages 10, 11 is seen in a direction from the membrane unit 2. The first stage 10 comprises a high-pressure inlet port 12, a high-pressure outlet port 13, a low-pressure inlet port 14 and a low-pressure outlet port 15.

In a similar way the second stage 11 comprises a high-pressure inlet port 16, a high-pressure outlet port 17, low-pressure inlet port 18 and a low-pressure outlet port 19.

The high-pressure outlet connection 4 of the membrane unit 2 is connected to a motor arrangement 20, 20'. Furthermore, the high-pressure outlet connection 4 of the membrane unit 2 is connected to the high-pressure inlet port 12 of the first stage 10 of the pressure exchanger 9. The high-pressure outlet port 13 of the first stage 10 of the pressure exchanger 9 is connected to the high-pressure inlet connection 3 of the membrane unit 2. The low-pressure outlet port 15 of the first stage 10 of the pressure exchanger 9 is connected to the high-pressure inlet port 16 of the second stage 11 of the pressure exchanger 9. The high-pressure outlet port 17 of the second stage is connected to the low-pressure inlet port 14 of the first stage. The low-pressure inlet port 18 is connected to a further supply pump (not shown).

The low-pressure outlet port 19 of the second stage 11 is connected to an outlet side 21 of the motor arrangement 20, 20'. The outlet side 21 of the last motor (in flow direction) is connected to an outlet 22 of the pressure retarded osmosis system.

The motor arrangement 20, 20' is driven by the fluid coming from the high-pressure outlet connection 4 of the membrane unit 2, i.e. it uses the high-pressure of this liquid. The motor arrangement 20, 20' can have different forms. It is possible to use a single motor 20, two motors 20, 20' as shown, or more than two motors. The motor or motors 20, 20' can convert this "potential energy" of the liquid in another form of energy, for example electric energy. In this case the motors 20, 20'drive an electric generator. The electric energy of this generator can then be used to drive the supply pump 8 and/or the stages 10, 11 of the pressure exchanger 9. However, in some cases it is not necessary to produce electrical energy as an intermediate energy. It is also possible to use the mechanical energy directly to drive another pump or elements of the pressure exchanger 9. When more than one motor is used, the pressure difference over each motor can be kept smaller than the pressure difference between the

In order to facilitate the following explanation, numbers are indicated at certain positions in the system, wherein "P" symbolizes a pressure and "v" symbolizes a volume flow. An indication "P = 200" can be considered meaning a pressure of 200 bar. An indication "v = 100" can be considered meaning a volume flow 100 l/sec. However, these numbers are for purposes of illustration only. Other volume flows and other pressures can be used.

A volume flow v = 100, for example 100 l/sec, at a pressure P = 10, for example 10 bar, is supplied to the low-pressure inlet connection 6 of the membrane unit 2, a volume flow of the same magnitude v = 100 at a pressure P = 1, i.e. a volume flow of for example 100 l/sec at a pressure of 1 bar, is supplied to the low-pressure inlet port 18 of the second stage 11 of the pressure exchanger 9, where it is increased by approximately 70 bar to "P = 70", so that the volume flow 100 l/sec at a pressure of 70 bar is supplied to the low-pressure inlet port 14 of the first stage 10 of the pressure exchanger 9. The first stage 10 increases the pressure further to 200 bar, so that a volume flow of 100 l/sec at a pressure of 200 bar is supplied to the high-pressure inlet connection 3 of the membrane unit 2. Since there is basically no pressure loss between the high-pressure inlet connection 3 and the high-pressure outlet connection 4, the liquid at the high-pressure outlet connection 4 has the same pressure P = 200, e. g. 200 bar. This pressure is fed back to the high-pressure inlet port 12 of the first stage 10 of the pressure exchangers and transfers a pressure difference of 130 bar to the liquid entering the low-pressure inlet port 14. Thus, at the low-pressure outlet port 15 of the first stage 10 there is a pressure P = 70, e. g. 70 bar, available which is supplied to the high-pressure inlet port 16 of the second stage 11, so that this pressure can be transferred to the liquid entering the low-pressure inlet port 18 of the second stage 11.

However, in an ideal case the total volume flow supplied to the low-pressure inlet connection 6 of the membrane unit 2 has passed the membrane arrangement 5 and reaches the high-pressure outlet connection 4, so that at the high-pressure outlet connection 4 a volume flow v = 200 at a pressure P = 200 is available, i.e. a volume flow which has been doubled, however, having the same pressure. Thus, half of the liquid of the volume flow of the high-pressure outlet connection 4 can be fed back to the pressure exchanger 9, wherein the other half can be supplied to the motor 20 which can be used to produce mechanical energy. Since the liquid from the low-pressure outlet port 19 of the second stage 11 of the pressure exchanger 9 is fed back to the outlet 21 of the motor 20, there is a volume v = 200 leaving the pressure retarded osmosis system 1. It should be noted that this is a description of an ideal situation. In reality not all of the volume flow fed to the low-pressure inlet connection 6 of the membrane unit 2 will pass the membrane arrangement 5 and will reach the high-pressure outlet connection 4 of the membrane unit 2. However, the difference in the salt concentration of the liquid on the two sides of the membrane arrangement 5 can be used to produce mechanical energy 8 of the motor 20. The liquid leaving the outlet 22 of the pressure retarded osmosis system has then a lower salt concentration and only a very small pressure and can be wasted.

An ideal case can, however, not reached since the water used has always some impurities. The impurities in the low-pressure and low salinity water increases and if it increases too much, it can damage the membranes, which is called "scaling". Thus, some low-pressure water is caused to flow all the way through the membrane arrangement 5 to "keep it clean".

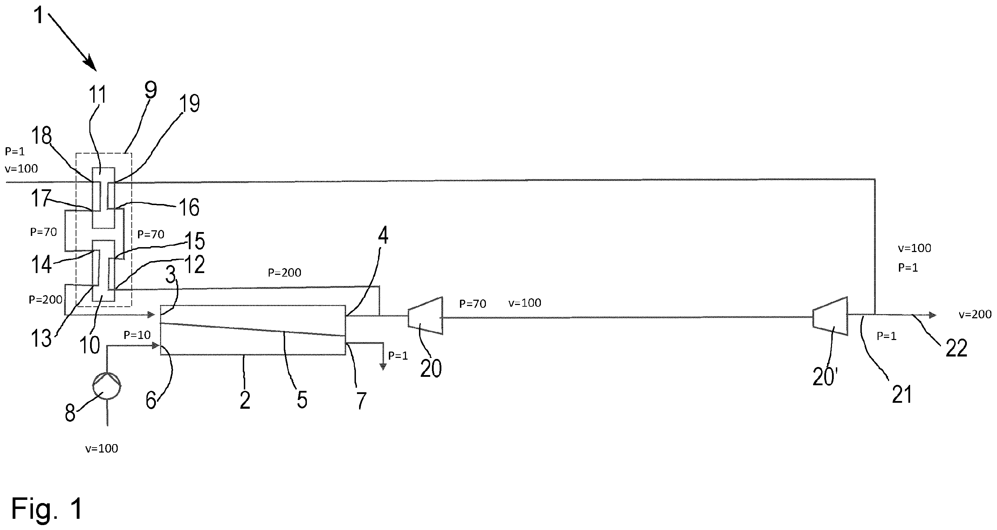

According to the invention, a feed pump (not shown in Fig. 1) is arranged in the high-pressure loop, i.e. in the connection between the high-pressure outlet connection 4 of the membrane unit 2 and the high-pressure inlet port 12 of the pressure exchanger 9. This feed pump helps to let the liquid in the high-pressure connection flow. The feed pump raises the pressure only by a small amount, for example by 1 bar. The pressure increase is chosen just to have the liquid "running".

The feed pump is a positive displacement pump, namely a vane pump. In this case, it can be detected how much liquid is being running through the feed pump and this again means that it is possible to regulate based on this information the behaviour of the pressure-exchanger 9, for example controlling the RPM of the pressure exchanger 9.

According to the invention, the pressure exchanger 9 and the vane pump are integrated.

It is also possible to modify at least one stage 10, 11 of the pressure exchanger 9 by using at least in one of the stages 10, 11 more than one pressure exchange unit. Preferably, the second stage 11 of the pressure exchanger 9 comprises more pressure exchange units than the first stage 10. It is, for example, possible to have several small pressure exchange units increasing the pressure from 1 to 70 bar in the second stage 11 and one big pressure exchange unit increasing the pressure from 70 to 200 bar in the first stage 10. This should increase the efficiency because the internal leakage is not increasing proportional with volume flow. The numbers are used only as example.

When the second stage 11 of the pressure exchanger 9 comprises two or more pressure exchangers, it is preferable that these pressure exchange units have the same capacity. In this way they could be arranged on the same axle of an electric motor that in this way reduce Capex, footprint and increases a bit efficiency. In other words, at least two pressure exchange units of the same stage 11 are driven by a common drive.

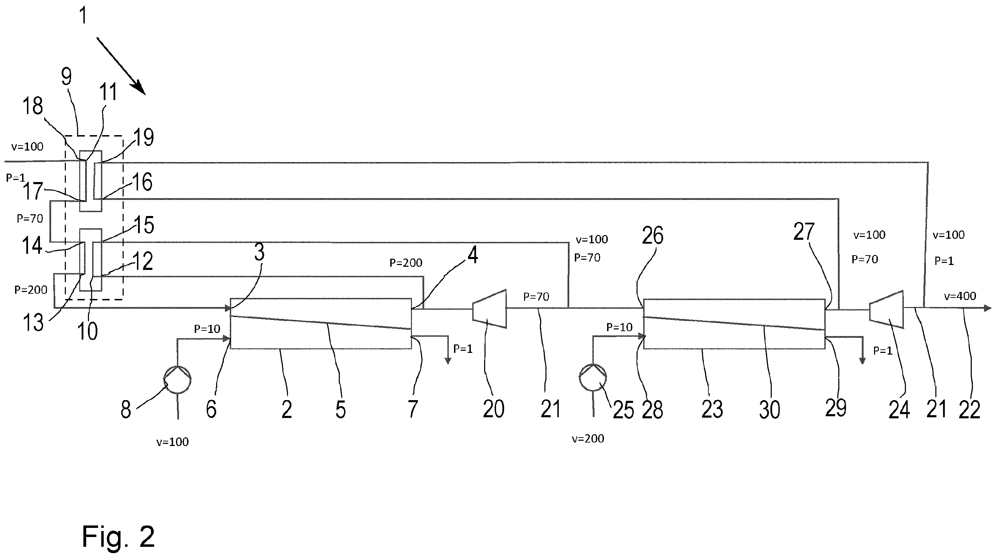

Fig. 2 shows a second embodiment of a retarded osmosis system 1 in which some elements have been doubled, so that the membrane unit 2 is now termed "first membrane unit" and one of the motors, namely the motor 20, is now termed "first motor". This single first motor 20 can also be replaced by a two or more motors. The retarded osmosis system 1 comprises also a second motor 24 which can also be replaced by two or more motors. Furthermore, the supply pump 8 is termed first supply pump and the second membrane unit 23 is connected to a second supply pump 25. The second membrane unit 23 comprises a high-pressure inlet connection 26, a high-pressure outlet connection 27, a low-pressure inlet connection 28 connected to the second supply pump 25, a low-pressure outlet connection 29 and a second membrane arrangement 30. The high-pressure outlet connection 27 is connected to the second motor 24. The high-pressure inlet connection 26 is connected to the first motor 20.

The connection of the pressure exchanger 9 to the first membrane unit 2 is the same as in the embodiment shown in Fig. 1 with the following exception: The low-pressure outlet port 15 of the first stage 10 of the pressure exchanger 9 is connected to the high-pressure inlet connection 26 of the second membrane unit 23, whereas the high-pressure outlet connection 27 of the second membrane unit is connected to the high-pressure inlet connection 16 of the second stage 11 of the pressure exchanger 9.

When, for example a volume flow v = 100 at a pressure P = 10 is supplied to the low-pressure inlet connection 6 of the first membrane unit 2 and a volume flow v = 100 is supplied to the pressure exchanger 9, then the pressure exchanger 9 will supply a volume flow v = 100 at a pressure P = 200 to the high-pressure inlet connection 3 of the membrane unit 2. In an ideal case the volume flow supplied to the low-pressure inlet connection 6 of the first membrane unit is added to the inlet flow v = 100 supplied to the high-pressure inlet connection 3 of the first membrane unit, so that at the high-pressure outlet connection 4 of the first membrane unit 2 a volume flow v = 200 at a pressure P = 200 is available. This flow is split into two parts. One part is fed back to the pressure exchanger 9, i.e. v = 100 at pressure P = 200, and the other part is supplied to the first motor 20, i.e. v = 100, P = 200. The motor 20 transforms part of the pressure into mechanical energy, in this case 130 bar, so that the outlet 21 of the motor 30 shows a volume flow v = 100 of a pressure P = 70. A volume flow supplied to the first stage 10 of the pressure exchanger 9 is taken from the low-pressure outlet port 15 and supplied to the high-pressure inlet connection 26 of the second membrane unit 23. This volume flow at a pressure P = 70 is combined with the volume flow v = 100 from the motor 20, so that the volume flow entering the second membrane unit 23 on the high-pressure side is v = 200.

The second supply pump 25 supplies a volume flow of v = 200 to the low-pressure inlet connection 28 of the second membrane unit 23 which volume flow ideally completely passes the second membrane arrangement 30, so that at the high-pressure outlet connection 27 of the second membrane unit 23 a volume flow v = 400 is available. From this volume flow a part v = 100 at a pressure P = 70 is taken to be supplied to the high-pressure inlet port 16 of the second stage 11 of the pressure exchanger 9. This volume flow v = 100 at a low-pressure P = 1 is than fed back from the low-pressure outlet port 19 of the second stage 11 to the outlet 22 of the retarded osmosis system 1, so that here a volume flow v = 400 is available.

This has the advantage that the high salt concentration of the liquid leaving the first membrane unit 2 and the remaining high-pressure downstream the motor 20 can be used to produce further mechanical energy.

**In** order to take the different volume flows into account, the second supply pump 25 supplies a larger volume flow of liquid fed to the second membrane unit 23.

A first pressure difference over the first stage 10 of the pressure exchanger 9, i.e. a pressure difference between the high-pressure inlet port 12 and the low-pressure outlet port 15, corresponds to a second pressure difference over the first motor 20. This means that at the high-pressure inlet connection 26 of the second membrane unit 23 two volume flows having substantially the same pressure meet, so that no equalizing means are necessary.

Furthermore, it can be seen, since the pressure at the high-pressure inlet connection 26 and the high-pressure outlet connection 27 of the second membrane unit 23 is almost the same, that the pressure at the low-pressure outlet connection 15 of the first stage 10 and the pressure at the high-pressure inlet port 16 of the second stage 11 are also almost the same, so that with the pressures inside the pressure exchanger 9, i.e. between the two stages 10, 11, have not been changed in relation to the embodiment shown in Fig. 1.

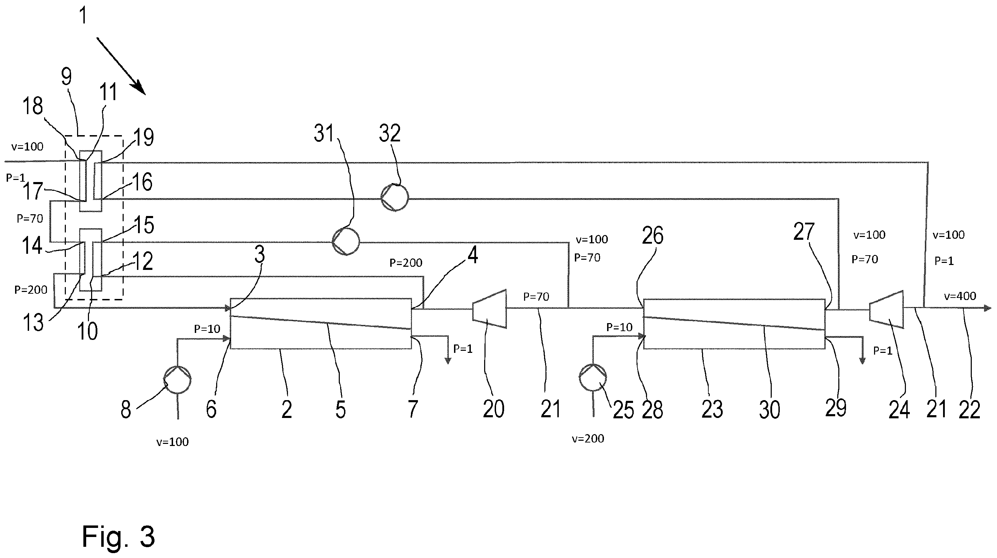

Fig. 3 shows a third embodiment of a retarded osmosis system 1 which basically corresponds to the second embodiment shown in Fig. 2. Same elements are denoted with the same reference numerals.

In the embodiment shown in Fig. 3 a first feed pump 31 is arranged in the high-pressure loop of the of the first stage 10 of the pressure exchanger 9. A second feed pump 32 is arranged in the high-pressure loop of the second stage 11 of the pressure exchanger 9, i.e. in a line connecting the high-pressure outlet connection 27 of the second membrane unit 23 to the high-pressure inlet connection 16 of the second stage 11 of the pressure exchanger 9. This feed pump 32 has the same effect as the feed pump 31 in the other high-pressure loop.

The additional feed pumps 31, 32 can be arranged in the position shown. It is, however, also possible to arrange the first feed pump 31 directly at the high-pressure inlet connection 3 of the membrane unit 2 and/or to arrange the second feed pump 32 between the high-pressure outlet port 17 of the second stage 11 of the pressure exchanger 9 and the low-pressure inlet port 14 of the first stage 10 of the pressure exchanger 9.

The feed pumps 31, 32 can be separate elements, but they can also be integrated in the pressure exchanger 9. However, according to the invention, at least feed pump 32 is integrated in the pressure exchanger 9.

## Claims

1. Pressure retarded osmosis system (1) comprising a membrane unit (2) having a high-pressure inlet connection (3) and a high-pressure outlet connection (4) on one side of a membrane arrangement (5) and a low-pressure inlet connection (6) and a low-pressure outlet connection (7) on the other side of the membrane arrangement (5), wherein the high-pressure inlet connection (3) is connected to a pressure exchanger (9), and the high-pressure outlet connection (4) is connected to a motor (20) and to a high-pressure inlet port (12) of the pressure exchanger (9), wherein the pressure exchanger (9) comprises at least a first stage (10) and a second stage (11), the first stage (10) being arranged nearest to the high-pressure inlet connection (3) of the membrane unit (2), wherein the high-pressure inlet port (12) of the first stage (10) is connected to the high-pressure outlet connection (4) of the membrane unit (2) and a high-pressure inlet port (16) of the second stage (11) is provided with fluid having a lower pressure and a high-pressure outlet port (17) of the second stage (11) is connected to a low-pressure inlet port (14) of the first stage (10),
**characterized in that** upstream of at least one of the high-pressure inlet ports (16) a feed pump (32) is arranged, wherein the feed pump (32) is a positive displacement pump, namely a vane pump, and is integrated in the pressure exchanger (9).

2. Pressure retarded osmosis system according to claim 1, **characterized in that** the membrane unit (2) is a first membrane unit and the motor (8) is a first motor, and a high-pressure inlet connection (26) of a second membrane unit (23) is connected to an outlet (21) of the first motor (20) and a second motor (24) is connected to the high-pressure outlet connection (27) of the second membrane unit (23).

3. Pressure retarded osmosis system according to claim 2, **characterized in that** the low-pressure outlet port (15) of the first stage (10) of the pressure exchanger (9) is connected to the high-pressure inlet connection (26) of the second membrane unit (23).

4. Pressure retarded osmosis system according to claim 2 or 3, **characterized in that** the high-pressure outlet connection (27) of the second membrane unit is connected to the high-pressure inlet port (16) of the second stage (11) of the pressure exchanger (9).

5. Pressure retarded osmosis system according to any of claims 2 to 4, **characterized in that** a first pressure difference over the first stage (10) of the pressure exchanger (9) corresponds to a second pressure difference over the first motor (20).

6. Pressure retarded osmosis system according to any of claims 2 to 5, **characterized in that** the low-pressure inlet connection (6) of the first membrane unit (2) is connected to a first supply pump (8) and the low-pressure inlet connection (28) of the second membrane unit (23) is connected to a second supply pump (25).

7. Pressure retarded osmosis system according to claim 6, **characterized in that** the second supply pump (25) produces a larger volume flow than the first supply pump (8).

8. Pressure retarded osmosis system according to any one of the preceding claims, **characterized in that** the positive displacement pump is used as a flow meter.

9. Pressure retarded osmosis system according to claim 8, wherein said system is configured such that the positive displacement pump provides an information how much fluid is being running through the positive displacement pump and to use this information to control the behaviour of the pressure exchanger (9).

10. Pressure retarded osmosis system according to any one of the preceding claims, **characterized in that** at least one of the stages (10, 11) of the pressure exchanger (9) comprises more than one pressure exchange unit.

11. Pressure retarded osmosis system according to claim 10, **characterized in that** the second stage (11) of the pressure exchanger (9) comprises more pressure change units than the first stage (10).

12. Pressure retarded osmosis system according to claim 10 or 11, **characterized in that** the pressure exchange units of the same stage (11) have the same capacity.

13. Pressure retarded osmosis system according to any of claims 10 to 12, **characterized in that** at least two pressure exchange units of the same stage (11) are driven by a common drive.

## Patentansprüche

1. Druckretardierte-Osmose-System (1), umfassend eine Membraneinheit (2) mit einem Hochdruck-Einlassanschluss (3) und einem Hochdruck-Auslassanschluss (4) auf einer Seite einer Membrananordnung (5) sowie einem Niederdruck-Einlassanschluss (6) und einem Niederdruck-Auslassanschluss (7) auf der anderen Seite der Membrananordnung (5), wobei der Hochdruck-Einlassanschluss (3) mit einem Druckaustauscher (9) verbunden ist und der Hochdruck-Auslassanschluss (4) mit einem Motor (20) sowie mit einem Hochdruck-Einlassanschluss (12) des Druckaustauschers (9) verbunden ist, wobei der Druckaustauscher (9) mindestens eine erste Stufe (10) und eine zweite Stufe (11) umfasst, wobei die erste Stufe (10) am nächsten zu dem Hochdruck-Einlassanschluss (3) der Membraneinheit (2) angeordnet ist, wobei der Hochdruck-Einlassanschluss (12) der ersten Stufe (10) mit dem Hochdruck-Auslassanschluss (4) der Membraneinheit (2) verbunden ist und ein Hochdruck-Einlassanschluss (16) der zweiten Stufe (11) mit Fluid versorgt wird, das einen niedrigeren Druck hat, und ein Hochdruck-Auslassanschluss (17) der zweiten Stufe (11) mit einem Niederdruck-Einlassanschluss (14) der ersten Stufe (10) verbunden ist,
**dadurch gekennzeichnet, dass** stromaufwärts von mindestens einem der Hochdruck-Einlassanschlüsse (16) eine Förderpumpe (32) angeordnet ist, wobei die Förderpumpe (32) eine Verdrängerpumpe, nämlich eine Flügelzellenpumpe, ist und in den Druckaustauscher (9) integriert ist.

2. Druckretardierte-Osmose-System nach Anspruch 1, **dadurch gekennzeichnet, dass** die Membraneinheit (2) eine erste Membraneinheit und der Motor (8) ein erster Motor ist, und dass ein Hochdruck-Einlassanschluss (26) einer zweiten Membraneinheit (23) mit einem Auslass (21) des ersten Motors (20) verbunden ist und ein zweiter Motor (24) mit dem Hochdruck-Auslassanschluss (27) der zweiten Membraneinheit (23) verbunden ist.

3. Druckretardierte-Osmose-System nach Anspruch 2, **dadurch gekennzeichnet, dass** der Niederdruck-Auslassanschluss (15) der ersten Stufe (10) des Druckaustauschers (9) mit dem Hochdruck-Einlassanschluss (26) der zweiten Membraneinheit (23) verbunden ist.

4. Druckretardierte-Osmose-System nach Anspruch 2 oder 3, **dadurch gekennzeichnet, dass** der Hochdruck-Auslassanschluss (27) der zweiten Membraneinheit mit dem Hochdruck-Einlassanschluss (16) der zweiten Stufe (11) des Druckaustauschers (9) verbunden ist.

5. Druckretardierte-Osmose-System nach einem der Ansprüche 2 bis 4, **dadurch gekennzeichnet, dass** eine erste Druckdifferenz über der ersten Stufe (10) des Druckaustauschers (9) einer zweiten Druckdifferenz über dem ersten Motor (20) entspricht.

6. Druckretardierte-Osmose-System nach einem der Ansprüche 2 bis 5, **dadurch gekennzeichnet, dass** der Niederdruck-Einlassanschluss (6) der ersten Membraneinheit (2) mit einer ersten Versorgungspumpe (8) verbunden ist und der Niederdruck-Einlassanschluss (28) der zweiten Membraneinheit (23) mit einer zweiten Versorgungspumpe (25) verbunden ist.

7. Druckretardierte-Osmose-System nach Anspruch 6, **dadurch gekennzeichnet, dass** die zweite Versorgungspumpe (25) einen größeren Volumenstrom erzeugt als die erste Versorgungspumpe (8).

8. Druckretardierte-Osmose-System nach einem der vorstehenden Ansprüche, **dadurch gekennzeichnet, dass** die Verdrängerpumpe als ein Durchflussmesser verwendet wird.

9. Druckretardierte-Osmose-System nach Anspruch 8, wobei das System so eingerichtet ist, dass die Verdrängerpumpe Informationen darüber bereitstellt, wie viel Fluid durch die Verdrängerpumpe läuft, und dass es diese Informationen zur Steuerung des Verhaltens des Druckaustauschers (9) verwendet.

10. Druckretardierte-Osmose-System nach einem der vorstehenden Ansprüche, **dadurch gekennzeichnet, dass** mindestens eine der Stufen (10, 11) des Druckaustauschers (9) mehr als eine Druckaustauscheinheit umfasst.

11. Druckretardierte-Osmose-System nach Anspruch 10, **dadurch gekennzeichnet, dass** die zweite Stufe (11) des Druckaustauschers (9) mehr Druckaustauscheinheiten umfasst als die erste Stufe (10).

12. Druckretardierte-Osmose-System nach Anspruch 10 oder 11, **dadurch gekennzeichnet, dass** die Druckaustauscheinheiten derselben Stufe (11) die gleiche Kapazität aufweisen.

13. Druckretardierte-Osmose-System nach einem der Ansprüche 10 bis 12, **dadurch gekennzeichnet, dass** mindestens zwei Druckaustauscheinheiten derselben Stufe (11) von einem gemeinsamen Antrieb angetrieben werden.

## Revendications

1. Système d'osmose retardée par pression (1) comprenant une unité à membrane (2) ayant un raccord d'entrée haute pression (3) et un raccord de sortie haute pression (4) d'un côté d'un agencement de membrane (5) et un raccord d'entrée basse pression (6) et un raccord de sortie basse pression (7) de l'autre côté de l'agencement de membrane (5), où le raccord d'entrée haute pression (3) est raccordé à un échangeur de pression (9), et le raccord de sortie haute pression (4) est raccordé à un moteur (20) et à un orifice d'entrée haute pression (12) de l'échangeur de pression (9), où l'échangeur de pression (9) comprend au moins un premier étage (10) et un second étage (11), le premier étage (10) étant agencé le plus près du raccord d'entrée haute pression (3) de l'unité à membrane (2), où l'orifice d'entrée haute pression (12) du premier étage (10) est raccordé au raccord de sortie haute pression (4) de l'unité à membrane (2) et un orifice d'entrée haute pression (16) du second étage (11) est alimenté en fluide ayant une pression inférieure et un orifice de sortie haute pression (17) du second étage (11) est raccordé à un orifice d'entrée basse pression (14) du premier étage (10),
**caractérisé en ce qu'**en amont d'au moins l'un des orifices d'entrée haute pression (16), une pompe d'alimentation (32) est agencée, où la pompe d'alimentation (32) est une pompe volumétrique, à savoir une pompe à palettes, et est intégrée dans l'échangeur de pression (9).

2. Système d'osmose retardée par pression selon la revendication 1, **caractérisé en ce que** l'unité à membrane (2) est une première unité à membrane et le moteur (8) est un premier moteur, et un raccord d'entrée haute pression (26) d'une seconde unité à membrane (23) est raccordé à une sortie (21) du premier moteur (20) et un second moteur (24) est raccordé au raccord de sortie haute pression (27) de la seconde unité à membrane (23).

3. Système d'osmose retardée par pression selon la revendication 2, **caractérisé en ce que** l'orifice de sortie basse pression (15) du premier étage (10) de l'échangeur de pression (9) est raccordé au raccord d'entrée haute pression (26) de la seconde unité à membrane (23).

4. Système d'osmose retardée par pression selon la revendication 2 ou 3, **caractérisé en ce que** le raccord de sortie haute pression (27) de la seconde unité à membrane est raccordé à l'orifice d'entrée haute pression (16) du second étage (11) de l'échangeur de pression (9).

5. Système d'osmose retardée par pression selon l'une des revendications 2 à 4, **caractérisé en ce qu'**une première différence de pression sur le premier étage (10) de l'échangeur de pression (9) correspond à une seconde différence de pression sur le premier moteur (20).

6. Système d'osmose retardée par pression selon l'une des revendications 2 à 5, **caractérisé en ce que** le raccord d'entrée basse pression (6) de la première unité à membrane (2) est raccordé à une première pompe d'acheminement (8) et le raccord d'entrée basse pression (28) de la seconde unité à membrane (23) est raccordé à une seconde pompe d'acheminement (25).

7. Système d'osmose retardée par pression selon la revendication 6, **caractérisé en ce que** la seconde pompe d'acheminement (25) produit un débit volumique supérieur à celui de la première pompe d'acheminement (8).

8. Système d'osmose retardée par pression selon l'une quelconque des revendications précédentes, **caractérisé en ce que** la pompe volumétrique est utilisée comme débitmètre.

9. Système d'osmose retardée par pression selon la revendication 8, dans lequel ledit système est configuré de sorte que la pompe volumétrique fournisse une information sur la quantité de fluide circulant à travers la pompe volumétrique et utilise cette information pour commander le comportement de l'échangeur de pression (9).

10. Système d'osmose retardée par pression selon l'une quelconque des revendications précédentes, **caractérisé en ce qu'**au moins l'un des étages (10, 11) de l'échangeur de pression (9) comprend plus d'une unité d'échange de pression.

11. Système d'osmose retardée par pression selon la revendication 10, **caractérisé en ce que** le second étage (11) de l'échangeur de pression (9) comprend plus d'unités d'échange de pression que le premier étage (10).

12. Système d'osmose retardée par pression selon la revendication 10 ou 11, **caractérisé en ce que** les unités d'échange de pression du même étage (11) ont la même capacité.

13. Système d'osmose retardée par pression selon l'une des revendications 10 à 12, **caractérisé en ce qu'**au moins deux unités d'échange de pression du même étage (11) sont entraînées par un entraînement commun.
